# EUROPÄISCHE PATENTSCHRIFT

(11) **EP 2 915 237 B1**
(45) Veröffentlichungstag und Bekanntmachung des Hinweises auf die Patenterteilung: **25.12.2019**
(21) Anmeldenummer: 13798995.0
(22) Anmeldetag: 27.11.2013
(51) Int. Cl.: H02K 1/18, F16B 19/02, F03D 9/25, F03D 80/70, F03D 15/20, H02K 1/12, F16B 5/02, H02K 7/18, F16B 43/02, H02K 1/28

(54) **DYNAMOELEKTRISCHE MASCHINE MIT SEGMENTIERTEM AUFBAU DES STATORS UND/ODER ROTORS**
DYNAMO-ELECTRICAL MACHINE WITH SEGMENTED STATOR STRUCTURE AND/OR ROTOR STRUCTURE
MACHINE DYNAMO-ÉLECTRIQUE MUNIE D'UN STATOR ET/OU D'UN ROTOR DE CONCEPTION SEGMENTÉE

(30) Priorität: 06.12.2012 DE 102012222449
(43) Veröffentlichungstag der Anmeldung: 09.09.2015
(73) Patentinhaber: Siemens Aktiengesellschaft, 80333 München (DE)
(72) Erfinder: HARTMANN, Ulrich, 14197 Berlin (DE); JUNGE, Martin, 94481 Grafenau (DE); KERMAS, Daniel, 10317 Berlin (DE); RICHTER, Friederike, 10963 Berlin (DE); SCHIFFERER, Klaus, 94127 Neuburg am Inn (DE); TROGISCH, Gordon, 15344 Strausberg (DE)
(86) Internationale Anmeldenummer: PCT/EP2013/074841
(87) Internationale Veröffentlichungsnummer: WO 2014/086633

(56) Entgegenhaltungen:
- WO-A1-03/056192
- US-A1- 2004 265 090
- US-A1- 2011 266 913
- US-A1- 2012 133 145

## Beschreibung

Die Erfindung betrifft eine dynamoelektrische Maschine, insbesondere eine große dynamoelektrische Maschine mit Leistungen größer 1 MW. Diese werden häufig in segmentierter Bauweise ausgeführt, um Transportschwierigkeiten auf Straßen und der Bahn aus dem Weg zu gehen. Dabei können entweder der Rotor der Maschine, der Stator der Maschine oder sowohl Stator als auch Rotor segmentiert ausgeführt werden. Beim Zusammenbau der Segmente zu einem kompletten Stator- oder Rotorring entstehen, durch Fertigungstoleranzen der jeweiligen Segmente bedingt, Probleme beim Zusammenbau dieser Segmente. So treten beispielsweise Schwierigkeiten beim Zusammenbau durch die Toleranzen der Teilungswinkel der Segmente oder durch einen Versatz von Durchgangsbohrungen von zwei in Rotationsrichtung des Stators oder Rotors hintereinander angeordneter Segmente auf, die miteinander verbunden werden sollen.

Die US 2011/0266913 A1 offenbart eine Statorstruktur, die aus mehreren Segmenten mittels Schraubverbindungen entlang der Rotationsrichtung zusammengebaut ist.

Die beim Zusammenbau von den Segmenten entstehenden Spalte zwischen den Segmenten wurden bisher deshalb entweder besonders, z.B. durch eine spanende Bearbeitung des Spaltes mit erhöhter Genauigkeitsanforderungen zur Minimierung der Toleranzen, bearbeitet, oder es wurde der Spalt zwischen den zu verbindenden Segmenten mittels Beilagen ausgefüttert, um durch eine konventionelle einfache Schraubverbindung die zu verbindenden Segmente zu fixieren. Dies führt aber letztlich insbesondere bei einer Baustellenendmontage zu aufwändigem und umständlichem Arbeiten.

Ausgehend davon, liegt der Erfindung die Aufgabe zugrunde, eine dynamoelektrische Maschine in Segmentbauweise zu schaffen, bei der die Segmente des Stators und/oder des Rotors dieser dynamoelektrischen Maschine auf einfache Art und Weise zusammengebaut werden können, so dass Toleranzen ausgleichbar sind und zusätzlich ein selbständiges Verstellen dieser Segmente verhindert wird.

Die Lösung der gestellten Aufgabe gelingt durch eine dynamoelektrische Maschine gemäß des Anspruchs 1. Diese elektrische Maschine offenbart einen Stator und einen gegenüber dem Stator um eine Rotationsachse rotierbar angeordneten Rotor, wobei der Stator und/oder der Rotor mehrere in Rotationsrichtung des Rotors hintereinander angeordnete Segmente aufweist, wobei die Segmente zur Verbindung mit ihren in Rotationsrichtung benachbart angeordneten Segmenten an ihren rotationsrichtungsseitigen Enden einen Flansch aufweisen, wobei die Flansche in Rotationsrichtung mindestens ein Loch aufweisen, wobei an den rotationsrichtungsseitigen Enden von benachbart angeordneten Segmenten zueinander gegenüberliegende Flansche mit einer durch ein Loch hindurchgehenden Schraubverbindung miteinander verbunden sind, wobei in dem Loch von mindestens einem von den an den rotationsrichtungsseitigen Enden zueinander gegenüberliegenden Flanschen zur Verbindung der zueinander gegenüberliegenden Flansche eine ein Außengewinde aufweisende Hülse angeordnet ist, wobei das Loch von mindestens einem der an den rotationsrichtungsseitigen Enden zueinander gegenüberliegenden Flaschen ein Innengewinde aufweist, wobei in das Innengewinde des Lochs die Hülse hineingedreht ist, wobei die Hülse eine Beabstandung der zueinander gegenüberliegenden Flansche bewirkt, wobei durch die Löcher von den an den rotationsrichtungsseitigen Enden zueinander gegenüberliegenden Flanschen und die Hülse eine Schraube hindurch verläuft, wobei die Schraube, insbesondere der Schraubenkopf, auf den Flansch eine Kraft ausübt und über die Hülse die zueinander gegenüberliegenden Flansche verbindet.

Erfindungsgemäß weist nunmehr zumindest ein der an den rotationsrichtungsseitigen Enden zueinander gegenüberliegenden Flanschen ein Innengewinde auf, wobei in das Innengewinde des Lochs eine Hülse eingedreht ist, wobei die Hülse eine Beabstandung der zueinander gegenüberliegenden Flansche bewirkt, wobei durch die Löcher von den an den rotationsrichtungsseitigen Enden zueinander gegenüberliegenden Flanschen und die Hülse eine Schraube hindurch verläuft, wobei die Schraube insbesondere durch ihren Schraubenkopf eine Kraft auf den Flansch ausübt und so über die Hülse die zueinander gegenüberliegenden Flansche verbindet. Dadurch ist nun eine besonders einfache Schraubverbindung zwischen zwei zu verbindenden Segmenten ermöglicht. Die Abstützung erfolgt nunmehr auf den umgebenden Flansch, so dass durch die aufgebrachte Vorspannung die Hülse an einem selbständigen Drehen gehindert wird und eine spielfreie Verbindung der beiden Flansche respektive der Segmente erfolgt.

Falls die beiden einander zugewandten Löcher Innengewinde aufweisen, sind diese insbesondere mit ungleichen Durchmessern versehen.

Weiterhin erweist es sich als vorteilhaft, wenn das andere Loch an den rotationsrichtungsseitigen Enden zueinander gegenüberliegenden Flanschen ebenfalls ein Innengewinde aufweist und die Schraube in das Innengewinde des anderen Lochs hineingedreht ist. Durch diese Maßnahme kann die Verwendung einer Mutter an der Schraube zur Fixierung der Flansche entfallen.

Jedoch kann bei einer längeren Schraube diese Schraube durch das zweite Loch hindurch gesteckt werden und durch eine Mutter gekontert werden.

Besonders vorteilhaft ist der Einsatz von einer oder mehreren Kugelkalotten im Spalt und/oder auf der Seite des Schraubenkopfes, um so noch mehr ein Toleranzausgleich zu schaffen und die Biegemomente von der Schraube fernzuhalten.

Eine derartig aufgeführte dynamoelektrische Maschine kann dabei als Elektromotor, beispielsweise als Antrieb bei Rohrmühlen oder als Generator, eingesetzt sein. Dabei ist insbesondere die Anwendung bei Windkraftgeneratoren, insbesondere bei direkt angetriebenen Windkraftgeneratoren, geeignet. Durch die erfindungsgemäße Verbindung der Segmente ist eine hochgenaue spanende Bearbeitung der Flansche nicht mehr unabdingbar. Dies reduziert die Herstellungskosten derartiger Segmente.

Die Erfindung sowie weitere vorteilhafte Ausgestaltungen der Erfindung werden anhand schematisch dargestellter Ausführungsbeispiele näher erläutert. Darin zeigen:
- FIG 1: eine erfindungsgemäße dynamoelektrische Maschine in einer perspektivischen Darstellung,
- FIG 2: einen Querschnitt eines Ständers der dynamoelektrische Maschine,
- FIG 3: ein durch den Spalt zwischen zwei Segmenten verlaufenden Längsschnitt der dynamoelektrische Maschine,
- FIG 4 bis 9: zeigen unterschiedlichste Ausführungsformer der Verbindung zweier Segmente mittels einer Hülse.

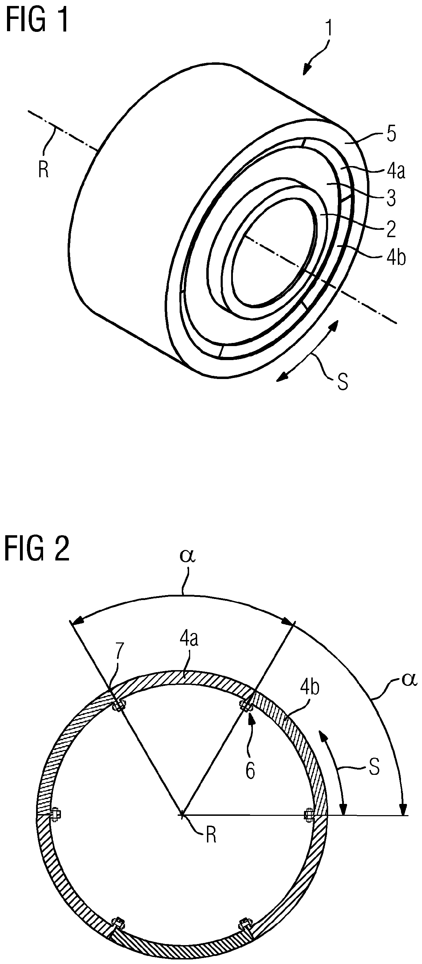

FIG 1 zeigt in einer perspektivischen prinzipiellen Darstellung eine erfindungsgemäße dynamoelektrische Maschine 1. Die dynamoelektrische Maschine 1 weist einen um eine Rotationsachse R rotierbar angeordneten Rotor 5 auf, der im Betrieb der dynamoelektrischen Maschine um die Rotationsachse R in Rotationsrichtung S rotiert. Weiterhin weist die dynamoelektrische Maschine 1 einen ruhend angeordneten Stator 4 auf, der im Rahmen dieses Ausführungsbeispiels über Lager auf einer Welle 2 mittels einer Tragvorrichtung positioniert ist. Der Stator 4 weist in Rotationsrichtung S des Rotors 5 hintereinander angeordnete Segmente 4a, 4b auf, wobei der Übersichtlichkeit halber nur zwei Segmente mit Bezugszeichen versehen wurden. Die Segmente sind dabei zu einem Ring angeordnet. Die Tragvorrichtung 3 verbindet über Lager die Welle 2 mit den Segmenten des Stators 4. Die dynamoelektrische Maschine 1 ist im Rahmen dieses Ausführungsbeispiels als so genannter Außenläufer ausgebildet, d.h. der Rotor 5 rotiert beim Betrieb der dynamoelektrischen Maschine um den zentral angeordneten Stator 4.

Alternativ kann die erfindungsgemäße dynamoelektrische Maschine auch als Innenläufer realisiert werden, bei dem der Stator 4 ebenfalls ruhend angeordnet ist, jedoch den Rotor 5 in Umfangsrichtung umgreift.

FIG 2 zeigt in einer schematisierten Darstellung einen Querschnitt des Stators 4 der erfindungsgemäßen dynamoelektrischen Maschine 1. Der Stator 4 weist mehrere in Rotationsrichtung S des Rotors 5 hintereinander angeordnete Segmente auf, die zusammengesetzt einen Ring bilden. In FIG 2 sind dabei nur die beiden in Rotationsrichtung S benachbart angeordneten Segmente 4a, 4b mit Bezugszeichen versehen. Im Rahmen des Ausführungsbeispiels weist der Stator 4 dabei sechs Segmente auf, wobei die Segmente einen Teilungswinkel *α* aufweisen, der geringfügig kleiner als 60° ist, so dass beim Zusammenfügen der Segmente zu dem Ring ein Spalt zwischen den Segmenten entsteht. In FIG 2 ist der Übersichtlichkeit halber nur der Spalt 7 mit einem Bezugszeichen versehen. Die Segmente sind mit Schraubverbindungen miteinander zu dem Ring verbunden, wobei in die FIG 2 nur eine Schraubverbindung 6 mit einem Bezugszeichen versehen ist.

Selbstverständlich können die Segmente auch andere Teilungswinkel *α* aufweisen, letztlich bestimmt der Transport und die Handbarkeit auf der Anlage die Größe des Teilungswinkels.

Im Gegensatz zum Stand der Technik wird bei der vorliegenden Erfindung der Spalt 7 zwischen den Segmenten nicht mit Material ausgefüttert und somit der Spalt 7 verfüllt, sondern der Spalt 7 bleibt als Luftspalt erhalten und die Flansche 9a,9b werden mit einer erfindungsgemäßen Schraubverbindung miteinander verbunden. Die in den rotationsrichtungsseitigen Enden 13a und 13b der benachbart angeordneten Segmente 4a und 4b zueinander gegenüberliegenden Flansche 9a und 9b werden mit einer durch ihr Loch 10a und 10b hindurchgehenden erfindungsgemäßen Schraubverbindung miteinander verbunden.

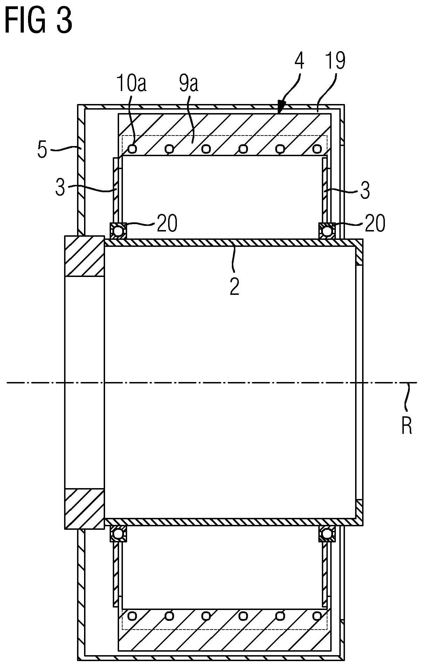

FIG 3 zeigt in einem Längsschnitt einen prinzipiellen Außenläufergenerator. Eine Welle 2 treibt den Rotor 5 an, der über den Luftspalt 19 der dynamoelektrischen Maschine mit dem Stator 4 elektromagnetisch wechselwirkt und elektrische Energie erzeugt. Der Stator 4 ist dabei über eine Tragvorrichtung 3 und über Lager 20 auf der sich drehenden Welle 2 abgestützt.

Gegenüber dem Stator 4 sind an dem Rotor 5 Permanentmagnete angeordnet. Über eine nicht näher dargestellte Drehmomentenstütze ist der Stator 4 an der Gondel der Windkraftanlage befestigt.

Dabei weist der Flansch 9a mehrere, in Richtung der Rotationsachse R entlang dem Flansch angeordnete Löcher auf, wobei nur das Loch 10a in FIG 3 mit einem Bezugszeichen versehen ist. Die dargestellte erfindungsgemäße Schraubverbindung ist somit im Rahmen des Ausführungsbeispiels mehrfach in Richtung Rotationsachse R entlang den Flanschen der Segmente vorhanden.

Es sei hier jedoch angemerkt, dass im Extremfall, auch die Flansche jeweilig auch nur ein einzelnes Loch aufweisen können, das zur Verbindung von den in Rotationsrichtung S benachbart angeordneten Segmenten dient.

Grundsätzlich sind am Umfang des Rotors 5 zur Erzeugung eines Magnetfelds Permanentmagnete angeordnet, die in Richtung des Stators 4 ausgerichtet sind. Aus Gründen der Übersichtlichkeit sind diese in den Figuren jedoch nicht dargestellt. Ebenso ist das im Stator 4 vorhandene Wicklungssystem nicht dargestellt, das notwendig ist, um mit den Permanentmagneten des Rotors 5 elektromagnetisch wechselzuwirken und somit als Antrieb oder als Generator zu fungieren. Das Wicklungssystem des Stators 4 bzw. des Segments kann dabei eine Ein- oder Zweischichtwicklung aus Formspulen sein, die vorteilhafterweise den gleichen Wickelschritt aufweisen und an den Stirnseiten des Stators 4 eine Zwei-oder Drei-Etagenwicklung darstellen.

Vorteilhafterweise weist jedes Segment ein komplettes Wicklungssystem auf, d.h. es sind nach der Montage keine Spulen in Nuten des Stators 4 einzulegen, die über die Grenzen der Segmente hinweg verlaufen. Das Segment mit seinem Wicklungssystem kann somit im Werk elektrisch geprüft, vergossen etc. werden. Auf der Anlage sind die Segmente über die erfindungsgemäße Art und Weise miteinander zu verbinden. Des Weiteren sind die elektrischen Verbindungen der Spulenanfänge und Spulenenden der jeweiligen Phasen herzustellen.

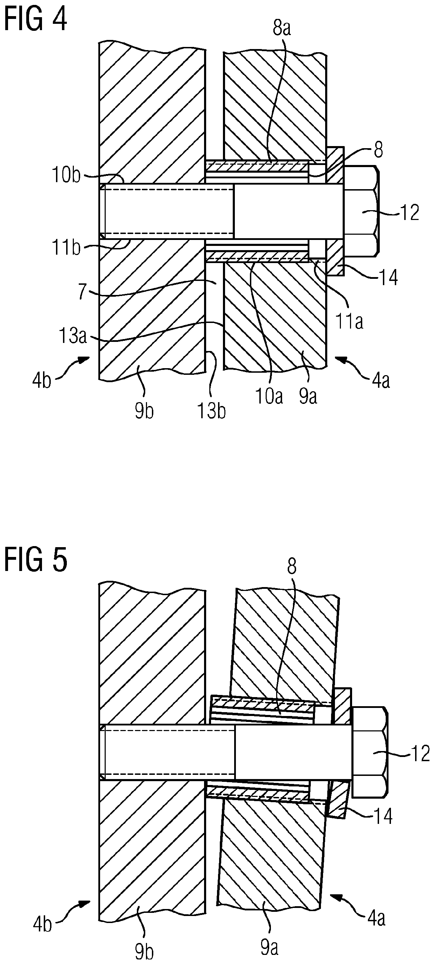

Gemäß FIG 4 weisen die Löcher 10a, 10b der Flansche 9a, 9b Innengewinde 11a, 11b auf. In das Innengewinde 11a ist eine ein Außengewinde 8a aufweisende Hülse 8 eingedreht, wobei die Hülse 8 eine Beabstandung der zueinander gegenüberliegenden Flansche 9a und 9b bewirkt. Die Hülse 8 weist eine Breite bzw. axiale Länge auf, die kleiner ist als die Breite des Flansches plus Breite des Spaltes 7. Dadurch kann sich die Kraftwirkung der Schraubverbindung auf den Flansch 9b erstrecken.

Durch die Löcher von den an den rotationsrichtungsseitigen Enden 13a, 13b zueinander gegenüberliegenden Flanschen 9a und 9b und die Hülse 8 verläuft eine Schraube 12, deren Gewinde 12a in das Innengewinde 11a des Lochs 10a des Flansches 9a hineingedreht ist. Die Schraube 12 übt auf den Flansch 9b eine Kraft aus und verbindet über diese Krafteinleitung die zueinander gegenüberliegenden Flansche 9a und 9b. Durch diese Anordnung kann ein durch Fertigungstoleranzen etc. bestehender Spalt 7 kraftschlüssig überbrückt werden und dabei "eingefroren" bzw. fixiert werden.

Die Abstützung der Krafteinwirkung erfolgt auf den umgebenden Flansch 9b. Durch die aufgebrachte Vorspannung auf die Hülse 8, die auch als Gewindebuchse bezeichnet wird, wird diese am selbständigen Verdrehen gehindert und es erfolgt eine spielfreie Verbindung der jeweiligen Segmente 4a, 4b. Vorteilhafterweise kann zum Drehen der Hülse 8 diese mit ein oder mehreren Schlitzen an der Stirnseite oder mit einem Innenvielkant, z.B. einem Sechs- oder Achtkant, ausgestattet sein.

FIG 5 zeigt ein weiteres Ausführungsbeispiel zweier zueinander zu verbindender Segmente 4a, 4b, die einen Versatz aufweisen. Wenn die Auflageflächen der Schraube 12 auf den Flansch 9a nicht senkrecht ist, bewirkt dies ein zusätzliches Biegemoment in der Schraube 12. Um diesen Effekt zu reduzieren wird neben den bekannten Elementen, wie Hülse 8 und Schraube 12, zwischen dem Kopf der Schraube 12 und dem Flansch 4a eine Spannscheibe 14 eingesetzt. Damit wird ein zusätzliches Biegemoment in der Schraube 12 vermieden, wenn die Bohrlöcher der beiden Flansche 9a, 9b nicht fluchten sollten.

Diese Reduzierung des zusätzlichen Biegemoments erfolgt durch einen verkleinerten Auflageradius des Kopfes der Schraube 12 auf eine Spannscheibe 14. Die Spannscheibe 14 wird u.a. auch dazu verwendet, Setzverluste der Schraubverbindung 6 auszugleichen.

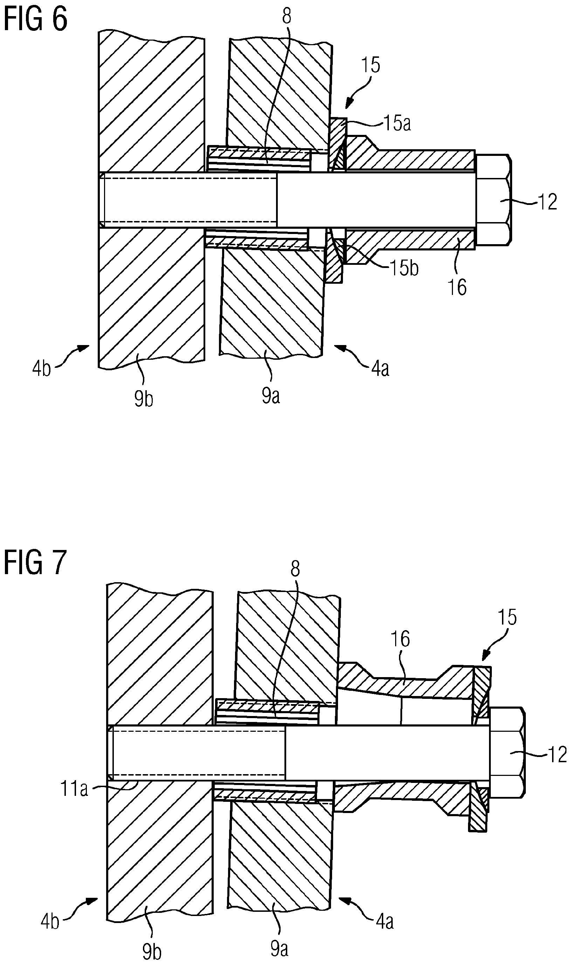

FIG 6 zeigt in einer weiteren Ausführungsform eine weitere Möglichkeit, dieses zusätzliche Biegemoment in der Schraube 12 zu vermeiden. Dabei wird an der Auflagefläche zwischen Schraubenkopf und Flansch 9a eine Kugelkalotte 15, die aus einer Kugelpfanne 15a und einer Kugelscheibe 15b besteht und außerdem einer Dehnhülse 16 eine Verbindung der beiden Segmente 4a und 4b geschaffen. Somit werden sämtliche Kräfte, die die Schraubverbindung schädigen könnten, kompensiert. Zur Erzielung einer ausreichenden Klemmlänge der Schraube 12 wird vorteilhafterweise eine Dehnhülse 16 eingesetzt. Diese Anordnung dient insbesondere auch dafür, Parallelitätsabweichungen der Auflageflächen auszugleichen.

FIG 7 zeigt eine weitere Anordnung, bei der ebenfalls die Biegemomente kompensiert werden. Dabei ist die Kugelkalotte 15 nunmehr zwischen Schraubenkopf und Dehnhülse 16 angebracht.

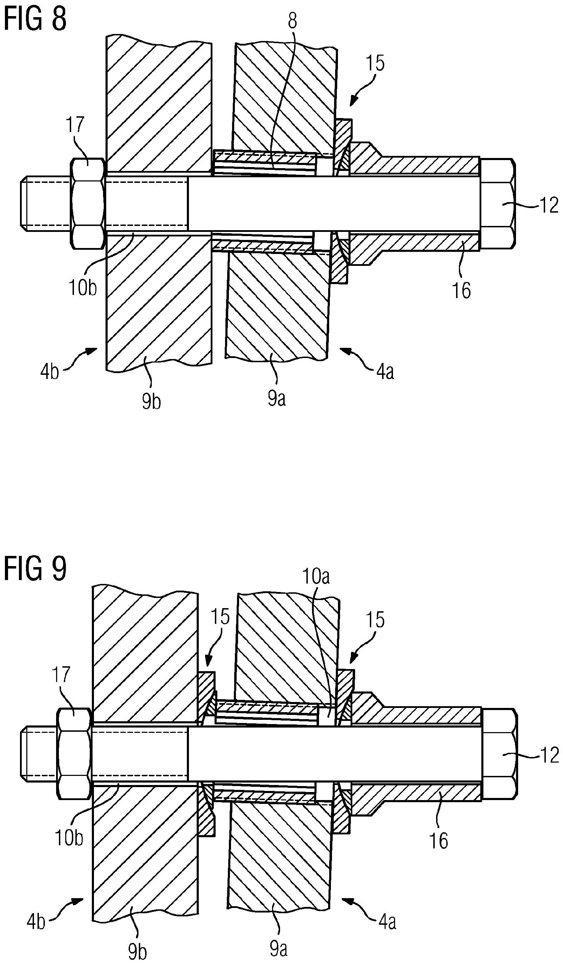

FIG 8 zeigt eine ähnliche Ausführungsform wie FIG 6, jedoch ist dabei die Schraube 12 axial länger ausgeführt, so dass sie am Ende des Loches 10b des Segments 4a durch eine Mutter 17 gekontert werden kann. Das Loch 10b ist dabei als Durchgangsbohrung ohne Gewinde ausgeführt. Dabei kann die Kugelkalotte 15 auch auf der Mutternseite angeordnet sein.

FIG 9 zeigt in einer weiteren Ausführungsform eine Schraubverbindung 6 zweier Segmente 4a, 4b, die sowohl in dem Spalt 7, also zwischen den Flanschen 4a, 4b, als auch auf der dem Kopf der Schraube 12 zugewandten Seite des Flansches 4a eine Kugelkalotte 15 aufweist. Zusätzlich ist auf dieser dem Schraubenkopf zugewandten Seite des Flansches 4a eine Dehnhülse 16 vorgesehen. Damit werden auch Biegemomente in der Schraube 12 vermieden, die bei sehr starken Fluchtungstoleranzen der beiden Löcher 10a und 10b entstehen können, wie dies u.a. bei zueinander schrägen Flächen der Fall ist.

Die erfindungsgemäße Ausgestaltung der Verbindung von Segmenten von Statoren 4 und/oder Rotoren 5 eignet sich insbesondere für Windkraftanlagen oder Rohrmühlen. Bei großen Durchmessern von Stator 4 und/oder Rotor 5 lassen sich somit deren Segmente einzeln zur Anlage transportieren und durch die erfindungsgemäße Verbindung dieser Segmente werden Toleranzen auf einfach Art und Weise bei der Montage ausgeglichen. Dadurch wird ein einheitlicher Luftspalt 19 der dynamoelektrischen Maschine geschaffen, so dass Verzerrungen der Sinusform des generatorisch erzeugten Stroms vermieden werden. Außerdem werden ungleiche magnetische Zugkräfte vermieden, was unter anderem die Lebensdauer der Lager verlängert.

## Patentansprüche

1. Dynamoelektrische Maschine (1) mit einem Stator (4) und einem gegenüber dem Stator (4) um eine Rotationsachse (R) rotierbar angeordneten Rotor (5), wobei der Stator (4) und/ oder der Rotor (5) mehrere in Rotationsrichtung (S) des Rotors (5) hintereinander angeordnete Segmente (4a,4b) aufweist, wobei die Segmente (4a,4b) zur Verbindung mit ihren in Rotationsrichtung (S) benachbart angeordneten Segmenten (4a, 4b) an ihren rotationsrichtungsseitigen Enden (13,13b) einen Flansch (9a,9b) aufweisen, wobei die Flansche (9a,9b) in Rotationsrichtung (S) mindestens ein Loch (10a,10b) aufweisen, wobei an den rotationsrichtungsseitigen Enden (13a,13b) von benachbart angeordneten Segmenten (4a,4b) zueinander gegenüberliegende Flansche (9a,9b) mit einer durch ein Loch (10a, 10b) hindurchgehenden Schraubverbindung (6) miteinander verbunden sind, wobei in dem Loch (10a,10b) von mindestens einem von den an den rotationsrichtungsseitigen Enden (13a,13b) zueinander gegenüberliegenden Flanschen (9a,9b) zur Verbindung der zueinander gegenüberliegenden Flansche (9a,9b) eine ein Außengewinde (8a) aufweisende Hülse (8) angeordnet ist, wobei das Loch (10a) von mindestens einem der an den rotationsrichtungsseitigen Enden (13a,13b) zueinander gegenüberliegenden Flaschen (9a,9b) ein Innengewinde (11a) aufweist, wobei in das Innengewinde (11a) des Lochs (10a) die Hülse (8) hineingedreht ist, wobei die Hülse (8) eine Beabstandung der zueinander gegenüberliegenden Flansche (9a,9b) bewirkt, wobei durch die Löcher (10a,10b) von den an den rotationsrichtungsseitigen Enden (13a,13b) zueinander gegenüberliegenden Flanschen (9a,9b) und die Hülse (8) eine Schraube (12) hindurch verläuft, wobei die Schraube (12), insbesondere der Schraubenkopf, auf den Flansch (9a) eine Kraft ausübt und über die Hülse (8) die zueinander gegenüberliegenden Flansche (9a,9b) verbindet, wobei die Kraft der Schraubverbindung (6) über eine Kugelkalotte (15), die aus einer Kugelpfanne (15a) und einer Kugelscheibe (15b) besteht, auf den Flansch (9a) erfolgt.

2. Dynamoelektrische Maschine (1) nach Anspruch 1, **da**- **durch gekennzeichnet**, dass die Kugelkalotte (15) am Flansch (9a) angeordnet ist.

3. Dynamoelektrische Maschine (1) nach einem der Ansprüche 1, oder 2, **dadurch gekennzeichnet, dass** Kugelkalotten (15) am Flansch (9b), in dem Spalt (7) zwischen den Flanschen (9a,9b) und/oder am Flansch (9a) zwischen Schraubkopf und Flansch (9a) angeordnet sind.

4. Dynamoelektrische Maschine (1) nach Anspruch 2, **da- durch gekennzeichnet**, dass zwischen Flansch (9a) und dem Schraubenkopf eine Dehnhülse (16) vorgesehen ist.

5. Dynamoelektrische Maschine (1) nach einem der vorhergehenden Ansprüche, **dadurch gekennzeichnet, dass** in der Hülse (8) eine Exzenterhülse angeordnet ist.

6. Dynamoelektrische Maschine (1) nach einem der vorhergehenden Ansprüche, wobei die Maschine als Elektromotor oder Generator ausgebildet ist.

7. Dynamoelektrische Maschine (1) nach einem der vorhergehenden Ansprüche, **dadurch gekennzeich- net**, dass die dynamoelektrische Maschine als Windkraftgenerator oder als Antrieb einer Rohrmühle eingesetzt ist.

8. Dynamoelektrische Maschine nach Anspruch 6, wobei der Generator als direkt angetriebener Windkraftgenerator ausgebildet ist.

9. Windkraftanlage mit einer dynamoelektrischen Maschine nach einem der Ansprüche 1 bis 6, wobei die dynamoelektrische Maschine einen Generator und/oder Rotor umfasst, der über zumindest eine Lagereinheit an einer Gondel der Windkraftanlage befestigt ist.

## Claims

1. Dynamo-electric machine (1) with a stator (4) and a rotor (5) which is rotatably arranged relative to the stator (4) about an axis of rotation (R), wherein the stator (4) and/or the rotor (5) has a plurality of segments (4a, 4b) arranged one after another in the rotational direction (S) of the rotor (5), wherein the segments (4a, 4b) have a flange (9a, 9b) at the side ends (13, 13b) thereof in the rotational direction for connection to segments (4a, 4b) arranged adjacent thereto in the rotational direction (S), wherein the flanges (9a, 9b) have at least one hole (10a, 10b) in the rotational direction (S), wherein flanges (9a, 9b) facing one another at the side ends (13a, 13b) in the rotational direction of segments (4a, 4b) arranged adjacent to one another are connected to one another by a screw connection (6) passing through a hole (10a, 10b), wherein to connect the flanges (9a, 9b) facing one another, a sleeve (8) having an external thread (8a) is arranged in the hole (10a, 10b) of at least one of the flanges (9a, 9b) facing one another at the side ends (13a, 13b) in the rotational direction, wherein the hole (10a) of at least one of the flanges (9a, 9b) facing one another at the side ends (13a, 13b) in the rotational direction has an internal thread (11a), wherein the sleeve (8) is screwed into the internal thread (11a) of the hole (10a), wherein the sleeve (8) creates a spacing between the flanges (9a, 9b) facing one another, wherein a screw (12) passes through the holes (10a, 10b) of the flanges (9a, 9b) facing one another at the side ends (13a, 13b) in the rotational direction, and through the sleeve (8), wherein the screw (12), in particular the screw head, exerts a force on the flange (9a) and via the sleeve (8) connects the flanges (9a, 9b) facing one another, wherein the force of the screw connection (6) on the flange (9a) is implemented via a universal ball joint (15) which consists of a spherical cup (15a) and a spherical disk (15b).

2. Dynamo-electric machine (1) according to claim 1, **characterised in that** the universal ball joint (15) is arranged on the flange (9a).

3. Dynamo-electric machine (1) according to one of claims 1 or 2, **characterised in that** universal ball joints (15) are arranged on the flange (9b), in the gap (7) between the flanges (9a, 9b) and/or on the flange (9a) between the screw head and the flange (9a).

4. Dynamo-electric machine (1) according to claim 2, **characterised in that** a resilient sleeve (16) is provided between the flange (9a) and the screw head.

5. Dynamo-electric machine (1) according to one of the preceding claims, **characterised in that** an eccentric bushing is arranged in the sleeve (8).

6. Dynamo-electric machine (1) according to one of the preceding claims, wherein the machine is configured as an electric motor or generator.

7. Dynamo-electric machine (1) according to one of the preceding claims, **characterised in that** the dynamo-electric machine is used as a wind energy generator or as a drive for a tube mill.

8. Dynamo-electric machine according to claim 6, wherein the generator is configured as a directly driven wind energy generator.

9. Wind energy installation comprising a dynamo-electric machine according to one of claims 1 to 6, wherein the dynamo-electric machine comprises a generator and/or rotor, which is fastened via at least one bearing unit to a nacelle of the wind energy installation.

## Revendications

1. Machine (1) dynamoélectrique, comprenant un stator (4) et un rotor (5) monté tournant par rapport au stator (4) autour d'un axe (R) de rotation, le stator (4) et/ou le rotor (5) ayant plusieurs segments (4a, 4b) disposés les uns derrière les autres dans le sens (S) de rotation du rotor (5), les segments (4a, 4b) ayant, pour l'assemblage avec leurs segments (4a, 4b) disposés au voisinage dans le sens (S) de rotation, sur leurs extrémités (13, 13b) du côté du sens de rotation, une bride (9a, 9b), les brides (9a, 9b) ayant, dans le sens (S) de rotation, au moins un trou (10a, 10b), dans laquelle, aux extrémités (13a, 13b), du côté du sens de rotation, de segments (4a, 4b) disposés de manière voisine, des brides (9a, 9b), opposées l'une à l'autre, sont assemblées l'une à l'autre par un vissage (6) passant dans un trou (10a, 10b), dans laquelle, dans le trou (10a, 10b) d'au moins l'une des bride (9a, 9b) opposées l'une à l'autre aux extrémités (13a, 13b) du côté du sens de rotation, est disposé, pour la liaison des brides (9a, 9b) opposées l'une à l'autre, un manchon (8) ayant un filetage (8a) extérieur, le trou (10a) d'au moins l'une des brides (9a, 9b) opposées l'une à l'autre aux extrémités (13a, 13b) du côté du sens de rotation, ayant un taraudage (11a), dans laquelle le manchon (8) se visse en tournant dans le taraudage (11a) du trou (10a), dans laquelle le manchon (8) provoque une mise à distance des brides (9a, 9b) opposées l'une à l'autre, dans laquelle une vis (12) passe dans le manchon (8) et dans les trous (10a, 10b) des brides (9a, 9b) opposées l'une à l'autre aux extrémités (13a, 13b) du côté du sens de rotation, la vis (12), notamment la tête de la vis appliquant une force à la bride (9a) et les brides (9a, 9b) opposées l'une à l'autre reliant par le manchon (8), la force du vissage (6) s'appliquant à la bride (9a) par une calotte (15) sphérique, constituée d'un coussinet (15a) sphérique et d'une rondelle (15b) à portée sphérique.

2. Machine (1) dynamoélectrique suivant la revendication 1, **caractérisée en ce que** la calotte (15) sphérique est disposée sur la bride (9a).

3. Machine (1) dynamoélectrique suivant l'une des revendications 1 ou 2, **caractérisée en ce que** des calottes (15) sphériques sont disposées sur la bride (9b), dans l'intervalle (7) entre les brides (9a, 9b) et/ou sur la bride (9a) entre la tête de la vis et la bride (9a).

4. Machine (1) dynamoélectrique suivant la revendication 2, **caractérisée en ce qu'**un manchon (16) de dilatation est prévu entre la bride (9a) et la tête de la vis.

5. Machine (1) dynamoélectrique suivant l'une des revendications précédentes, **caractérisée en ce qu'**un manchon d'excentrique est monté dans le manchon (8).

6. Machine (1) dynamoélectrique suivant l'une des revendications précédentes, dans laquelle la machine est constituée en moteur électrique ou en génératrice.

7. Machine (1) dynamoélectrique suivant l'une des revendications précédentes, **caractérisé en ce que** la machine dynamoélectrique est utilisée comme générateur d'éolienne ou comme entraînement d'un tube broyeur.

8. Machine (1) dynamoélectrique suivant la revendication 6, dans laquelle le générateur est constitué en générateur d'éolienne entraîné directement.

9. Installation éolienne ayant une machine dynamoélectrique suivant l'une des revendications 1 à 6, la machine dynamoélectrique comprenant un générateur et/ou un rotor, qui est fixé à une nacelle de l'installation éolienne par une unité de palier.
